# EUROPEAN PATENT APPLICATION

(11) **EP 1 202 592 A1**
(43) Date of publication of application: **02.05.2002**
(21) Application number: 01308676.4
(22) Date of filing: 11.10.2001
(51) Int. Cl.: H04Q 7/38

(54) **Mobile communications device control**

(30) Priority: 24.10.2000 GB 0026052
(71) Applicant: Pace Micro Technology PLC, Saltaire, Shipley, BD18 3LF (GB)
(72) Inventor: Johnson, Graham A., Guiseley, Leeds, LS20 8JR (GB)
(74) Representative: Wood, Graham

(57) **Abstract**

A mobile communications device control system is provided. The system is for use with a device capable of receiving and transmitting data in the form of calls or messages. The device is provided with receiving means for receiving a signal from a location (2), processing the signal and altering the operating condition of the device in accordance with the received signal. The signal emitted from the location (2) is effective within a localised, determinable area (8) of the location, thereby providing a localised controlling effect on the operation of the device.

## Description

The invention to which this application relates is a system and control means for the control of operation of mobile communication devices such as mobile telephones, within a specified or determinable area. By providing for the control of the operation of the mobile devices within a determinable area, so the control can be used to, for example, silence mobile phone ringing tones, prevent the operation of the device completely or change the operation of any other function which may be desired to be controlled within a particular area.

The increase in use of mobile communication devices, such as mobile telephone handsets has been accelerating rapidly and, whilst the use of the mobile telephone handset is of considerable advantage to users of the same, the operation of the phone can, in several instances, be irritating to other persons in the vicinity of the mobile phone and/or be of considerable danger to other persons within the vicinity of the mobile phone depending on the area and/or environment in which the mobile phone is in use.

Dealing with the irritation factor which can be caused by users, this is frequently the case when the mobile telephone is used in areas which are communal in nature such as, for example, train carriages, cinemas, theatre, football stadium and the like. In these cases, the irritation is most typically caused by a mobile phone receiving an incoming call which causes the mobile phone to ring and it is the ringing of the mobile phone and, in many instances the subsequent conversation which ensues, which causes the irritation. If, for example, in a railway carriage, a person is sleeping and a mobile phone rings, this may awake the person and irritate the same. In other environments such as the cinema or theatre, the ringing of the mobile phone can be distracting and cause other persons in the cinema or theatre to miss an important part of the film or play or can, in the case of a theatre, distract the actors.

In a second area of use, such as for example, petrol stations, surgical theatres, or hospitals in general, planes and the like, the use of the mobile phone can be a greater problem than merely causing irritation and can in fact cause danger. In terms of petrol stations, there is a risk of explosion, in terms of hospitals, there is a danger of an adverse effect on the operation of equipment and apparatus which may be controlling and/or in use in relation to the health of patients in a hospital, and in a plane, the use of the mobile phone may adversely affect the control systems for the flight of the plane.

Increasingly, many forms of mobile communication device include, or can be fitted with, a communication means which allows the reception of data signals without physical connection with the signals emitted from a location within a certain area or distance from the receiver. One such system is called Bluetooth (Registered Trade Mark) which allows the transmission and reception of signals between a signal emitter or beacon and devices which are fitted with a receiving device and which devices are within a specified area relating to the location of the beacon. The normal purpose of this system is to allow communication between, for example, a beacon and a control system for fixed applications within a premises, so as to allow the control of the apparatus.

Other known systems are provided and detailed in the following documents. Weiss K et al "Conventional Local Area Radio Coverage system" 1^{st} July 1991, Motorola Technical developments Vol 13 Page 67-69, relates to the use of devices such as mobile phones in sensitive areas and achieves this by subdividing the existing communication network used by the device by installing low power transmitters within the sensitive area which broadcast control data to the devices in the area. However this disclosure is based on the re-use of conventional radio frequency technology as the already used communication network at the central station and this, in itself may be the root cause of the problem which is being addressed by the current invention (such as for example the use of the device near petrol pumps). This system still therefore relies on the usage of the normal existing communication system such as the radio frequency system.

WO 9856192 discloses a means of preventing radio communications by the jamming of the desired communication channel with an interfering signal that disrupts the normal control channel operation and so this system does not allow the varied control of the devices merely the jamming of the same.

The aim of the present invention is to provide a means for controlling the operation of a mobile phone or other transportable or mobile communication device within a specified area so as to enable the control of a particular function or functions of the mobile device while in said area.

In a first aspect of the invention there is provided an operating control system for a mobile communications device, said device capable of receiving and transmitting data in the form of calls or messages characterised in that said device is provided with means for receiving a signal from a location when said device is within an area throughout which the signal is generated, processing said signal and altering the operating condition of the device in accordance with the received signal and said signal is emitted from a signal emitter and is effective within a localised, determinable area of said emitter location, thereby providing a localised controlling effect on the operation of said device.

In one embodiment, the signal which is emitted, when received, causes a function or functions of the mobile device to be disabled. In one example, the ringing function of a mobile phone is disabled such that if the mobile phone receives any incoming calls while within the determinable area, no ringing tone will be emitted by the mobile phone. In a further example, the ringing function of the mobile phone is switched to a vibrator function.

In another form of control, and more particularly where the use of the mobile device can be deemed to be a danger, such as for example in a plane, hospital, or petrol station, the signal which is emitted from the said location causes the mobile phone to be disabled from receiving or being used to transmit incoming or outgoing calls, thus disabling the mobile phone from use while the same is in the determinable area.

In one embodiment, the device is provided with a signal receiving device for receiving a signal emitted using a communication system other than the communication system used for the normal operation of the mobile device. This prevents the normal communication system used to relay messages and the like, which may be a cause of the original problem, from being relied upon to control the use of the device in the specified area. Furthermore it prevents any signals received by the device from the normal communication system from affecting the controlled operation of the device and therefore prevents the controlling operation from being affected by subsequent signals. One example of the invention is the use of a mobile telephone using a normal cellular communication system, being also provided with another signal receiver, such as a Bluetooth signal receiver, by which any controlling signal in a particular area can be received.

Typically, at the location from which the signal is emitted, a signal emitter is located which is compatible with the signal receiver provided within the device so as to provide a signal which can be transmitted throughout the determinable area. Typically the signal emitter is configured so as to emit only one type of signal uniformly throughout constant operation, or at least throughout operation during a defined period of line. In a further example a faraday cage is used to change the operating mode of the communications device

In one embodiment, rather than the signal being transmitted continuously, the signal is emitted at regular intervals such that, if a mobile device receives a signal it is then disabled for a set period of time and if it then receives a further signal within the period of time it is disabled for a further period of time thereafter, and so on until a signal is no longer received in a predetermined period of time whereupon the device is returned to normal operating conditions.

The strength of the signal which is emitted from the location can be determined and set at the time of installation following testing on site and in accordance with certain parameters such as the area throughout which the effect of the signal is required, the environment in which the signal is to be used such as externally, internally, whether any walls are present within the area, and so on and may also be configured in relation to potential hazards within the said area so that the signal itself does not adversely affect the operation of other apparatus, or pose a risk.

Typically, in addition to receiving the signal, the receiving device within the mobile device will also cause the mobile device to move to a predetermined mode of operation such as silent or discreet, so that the device will also perform a controlling effect on the mobile device operation.

Reference above and hereonin to mobile devices should be read and interpreted as covering many forms of communication devices such as mobile telephones, pagers, electronic diaries, electronic organisers and other forms of wireless or cordless telecommunications apparatus.

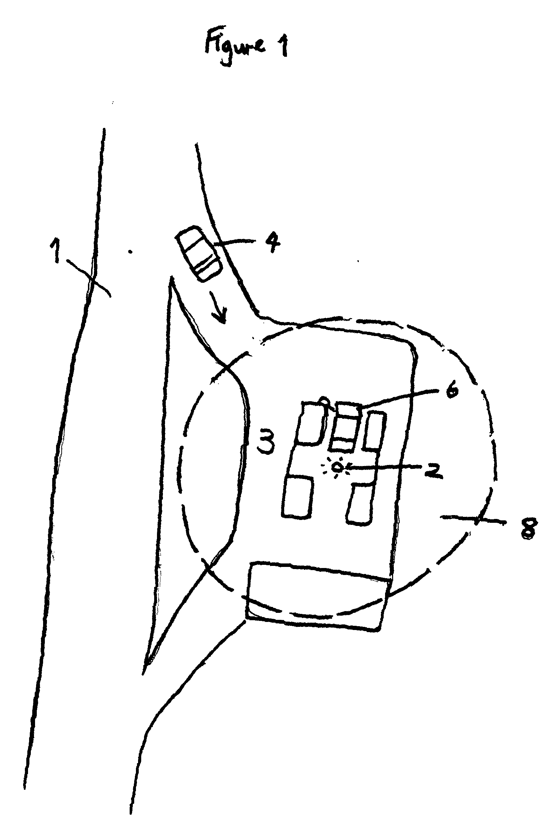

A specific embodiment of the invention is now described with reference to the accompanying drawing, wherein:-
Figure 1 illustrates a plan view of the invention in operation.

In accordance with the invention, a signal emitting location 2 is determined with reference to a particular environment, in this case, in the form of a petrol station forecourt 3 beside a road 1. Thus, a signal is emitted from the location 2 continuously or at regular time intervals and said signal is emitted so that it is of a strength and direction to cover the required area of the petrol station forecourt 3 as is indicated in the Figure 1 by broken lines, such that the area 8 defined by the broken line is the area in which the signal which is emitted has effect, and this includes the forecourt 3.

Thus, upon approaching the petrol station, a driver of a car 4 with a mobile phone therein, will find that they can use their mobile phone in a normal manner as they approach the petrol station as indicated by arrow 10. However, as they enter the area 8 which is defined by the broken line, as has the user of the car 6 already, the receiving device within the mobile phone in the car picks up and receives the signal which is emitted from the location 2. This signal is configured such that when processed by the mobile phone signal receiver for that signal, it causes the mobile phone to enter a mode of operation which is defined by the configuration of the signal, or is predefined within the mobile phone memory such that when the signal is received the mobile phone enters a predefined, altered condition. As the operation of a mobile telephone within a petrol station forecourt environment is hazardous, the particular condition in this case is for the mobile phone to be inoperable so that no incoming or outgoing telephone calls can be made.

Thus, for the duration of the mobile phone being within the area 8 defined by the broken line, i.e. for the duration of filling the car with petrol, paying for the petrol and driving away from the petrol pump, the mobile phone will not be usable, hence meeting and enforcing the warning requirements which are typically displayed in petrol station forecourts.

As the car 4 and mobile phone leaves the area 8, the mobile phone will continue to search for the signal from the signal emitter 2 and if no such signal is received within a predetermined time, say for example 30 seconds, the phone will revert to a normal operating condition, whereupon the same can be used as it was previously, before entering the area 8.

It should be appreciated that the example given herein can be repeated in any environment such as planes and hospitals with consideration being given, at the time of installation of the signal emitting means 2, to the environment in which the same is to be used.

It is also important to appreciate that the function change of the mobile phone need not be to completely turn off of the mobile phone but may be the disablement of a particular function such as the ringing tone to suit particular environment requirements, and to meet particular problems in that environment.

One type of signal which can be emitted and is particularly appropriate to this invention is that emitted by the Bluetooth transmission system wherein the signal emitter can be configured to emit a signal over a range of, say for example, 10-100 metres and of particular strength to suit particular environmental conditions.

Thus the present invention provides a control system for a mobile communication device which allows the device operation to be controlled in use sensitive areas, regardless of whether the device user regards warnings and/or requests to control their operation of the device, or not. In the invention, the device need not be rendered inoperable but may simply be altered in terms of operation.

In one embodiment the device has a number of predetermined operating characteristics, one of which the device alters upon receiving a signal, typically a different signal or using a different signal transmission system, to that used for normal operation of the device. In one example, the particular predetermined operating characteristic to be selected is dependant upon the particular requirement for the area and the selection made in accordance with the particular signal configuration in that area. One example is with respect to the particular frequency of the emitted signal at that area, i.e. one frequency for a first area to render the device inoperable, a second frequency in another area to render the ring time inoperable, a third frequency in a further area to disable the sending of outgoing calls, and so on, as required.

## Claims

1. An operating control system for a mobile communications device, said device capable of receiving and transmitting data in the form of calls or messages **characterised in that** said device is provided with means for receiving a signal emitted from a location (2) when said device is within an area throughout which the signal is generated, processing said signal and altering the operating condition of the device in accordance with the received signal and said signal is emitted from a signal emitter and is effective within a localised, determinable area (8) of said emitter location (2), thereby providing a localised controlling effect on the operation of said device.

2. A control system according to claim 1 **characterised in that** the signal emitted, when received by the device, causes a function or functions of the device to be altered and/or disabled.

3. A control system according to claim 1 **characterised in that** the device is provided with a signal receiving means for receiving a signal emitted using a communication system other than the communication system used for the normal operation of the device.

4. A control system according to claim 3 **characterised in that** the signal received by the signal receiving means activates a particular control sequence on the subsequent operation of the device irrespective of the normal communication system signals which may be received.

5. A control system according to claim 3 **characterised in that** the device is a mobile telephone using a cellular communication system for normal operation and the signal receiving means receives a signal from a different communication system to allow the controlled operation of the mobile telephone if such a signal is received.

6. A control system according to claim 5 **characterised in that** the mobile communications device has a Bluetooth(RTM) signal receiving means for receiving a signal at said area 8 emitted from a Bluetooth signal emitter.

7. A control system according to claim 1 **characterised in that** a faraday cage is used to generate the signal.

8. A control system according to claim 1 **characterised in that** the signal emitted at said location (2) emits a single continuous signal throughout the defined area.

9. A control system according to claim 1 **characterised in that** the signal emitted at said location (2) is emitted at pre-determined time intervals.

10. A control system according to claim 2 **characterised in that** when the device receives a signal, the operation of the same changes for a pre-determined period of time and if a further signal is not received thereafter, the device returns to its original operating condition.

11. A control system according to claim 1 **characterised in that** the device is any of a mobile telephone, pager, electronic diary, electronic organiser or other form of wireless or cordless telecommunications apparatus.

12. A control system according to claim 1 **characterised in that** the device is a mobile telephone and the signal, when received by the device, results in the ringing function of the telephone being disabled and/or switched to a different function.

13. A control system according to claim 1 **characterised in that** the device is a mobile telephone and the signal, when received causes the mobile phone to be disabled from receiving incoming calls and/or from transmitting outgoing calls.

14. A control system according to claim 1 **characterised in that** the device is provide with one predefined operating condition to which the device alters when it receives said signal.

15. A control system according to claim 14 **characterised in that** the device is provide with a number of different predefined operating conditions held in memory in the device and the selection of which of the operating conditions is selected is dependent upon the configuration of the signal received in any given area.

16. A control system according to claim 15 **characterised in that** the signal configuration can change to suit specific area requirements.

17. A control system according to claim 16 **characterised in that** the signal configuration changes in terms of the frequency of emission in different areas.
